# EUROPEAN PATENT APPLICATION

(11) **EP 4 838 427 A1**
(43) Date of publication of application: **11.11.2026**
(21) Application number: 26167288.5
(22) Date of filing: 24.03.2026
(51) Int. Cl.: G06N 10/60, G06N 3/0455, G06N 5/045, G06N 10/20

(54) **A QUANTUM CIRCUIT BASED AUTOENCODER ARCHITECTURE AND FEATURE SCORING METHOD**

(30) Priority: 09.05.2025 EP 25175501
(71) Applicant: Terra Quantum AG, 9000 St. Gallen (CH)
(72) Inventor: Sagingalieva, Asel, 9000 St. Gallen (CH); Lusnig, Luca, 9000 St. Gallen (CH); Melnikov, Alexey, 9000 St. Gallen (CH)
(74) Representative: Flentje, Hanno Alexander Peter

(57) **Abstract**

A computer-implemented method for determining a feature score for a scored input feature with a quantum circuit based autoencoder, comprising training the autoencoder to reconstruct input features of a multi-feature dataset, the autoencoder comprising a quantum circuit based encoder and a decoder, the encoder comprising a first encoding layer for encoding a first subset of the features of the multi-feature dataset in a quantum state of computation qubits; a variational layer for modifying the quantum state of the computation qubits based on a plurality of variational parameters; and a second encoding layer for encoding a second subset, different from the first subset, in the quantum state of the computation qubits after the variational layer; a projective measurement of the computation qubits for obtaining a latent feature vector having a reduced feature number; wherein the decoder is configured to reconstruct the features of the multi-feature dataset from the latent feature vector as an output; and determining the feature score of the scored feature based on a contribution score between the scored feature and the latent feature vector using the autoencoder.

## Description

### FIELD OF THE DISCLOSURE

The present disclosure is in the field of quantum computation. In particular, the present disclosure relates to a system and method for feature extraction and scoring in multi-feature datasets using quantum circuit based autoencoders, and a quantum circuit architecture.

### BACKGROUND

In the field of data analysis and machine learning, it is common to utilize feature extraction techniques to simplify complex datasets and enable efficient computational processing of large data structures. Most known techniques rely on statistical analysis of the dataset to quantify correlations in the data, which are subsequently analyzed by a human expert to identify features which can be omitted. However, as datasets become increasingly large and complex, the limitations of classical approaches become apparent, particularly in terms of generalization and analysis of complex datasets.

Autoencoders are neural networks, which receive a complex set of features and are tasked with the reproduction of this dataset, while having an intrinsic bottleneck, e.g. a feature layer with a smaller number of "latent" features, arranged between an "encoder" for encoding and processing the input features and a "decoder" for decoding the latent features back towards the original input. By training the neural network to reproduce feature sets with the inbuilt bottleneck, autoencoders become adept at reproducing features sets with similar hidden correlations, and are therefore commonly applied to detect faulty or manipulated data. In short, if the trained autoencoder is bad at reproducing the input, the input may be "atypical" and can be flagged as faulty or potentially manipulated, e.g. in the context of cybersecurity.

Quantum computers replace the classical computing paradigm a platform of controllable quantum mechanical systems whose state and interaction can be controlled to perform a computation. The computation is realized by a deterministic evolution of the controllable quantum mechanical systems, and the state of the quantum mechanical systems can be measured to determine the outcome of the computation.

The quantum computer generally encodes information in so called qubits, acting as a quantum mechanical equivalent of classical bits. Qubits are physical systems whose quantum mechanical state can be (coherently) controlled and (substantially) preserved between two basis states during the time of a computation, in the following referred to as |o> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. π/2. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

### SUMMARY OF THE DISCLOSURE

The present disclosure aims to provide an efficient architecture for a quantum circuit based autoencoder, which can efficiently harness quantum advantage for complex datasets, while limiting the resource requirement on the quantum hardware, particularly for the scoring of features in an input dataset, to exploit the quantum advantage realized in such quantum circuit based autoencoders for unsupervised feature scoring and selection.

The present disclosure provides a computer-implemented method and autoencoder system as set out in the appended independent claims. Examples thereof are detailed in the dependent claims.

A first aspect of the invention provides a computer-implemented method for determining a feature score for a scored feature of a multi-feature dataset with a quantum circuit based autoencoder. The method comprises training the quantum circuit based autoencoder to reconstruct features of the multi-feature dataset given the features of the multi-feature dataset as an input. The quantum circuit based autoencoder comprises a quantum circuit based encoder and a decoder. The quantum circuit based encoder comprises a first encoding layer for encoding a first subset of the features of the multi-feature dataset in a quantum state of computation qubits of a variational quantum circuit; a variational layer for modifying the quantum state of the computation qubits based on a plurality of variational parameters parametrizing the action of quantum gates of the variational layer, after the first subset of the features of the multi-feature dataset has been encoded in the computation qubits; and a second encoding layer for encoding a second subset of the features of the multi-feature dataset, different from the first subset, in the quantum state of the computation qubits of the variational quantum circuit after the quantum state has been modified by an action of the variational layer; a projective measurement of the computation qubits for obtaining a latent feature vector, the latent feature vector having a smaller feature number than the features of the multi-feature dataset given as an input. The decoder is configured to receive the latent feature vector generated by the quantum circuit based encoder as an input and to reconstruct the features of the multi-feature dataset from the latent feature vector as an output. Training the autoencoder comprises updating the variational parameters of the quantum circuit based encoder based on a cost attributed to the output in view of the features of the multi-feature dataset provided as the input. The method further comprises determining the feature score of the scored feature based on a contribution score between the scored feature and the latent feature vector using the quantum circuit based autoencoder.

The quantum circuit-based autoencoder may be an autoencoder that utilizes quantum circuits for encoding the multi-feature dataset and optionally also for decoding the information encoded in the latent feature vector towards the original input feature vector.

The quantum circuit based encoder may refer to a variational quantum circuit forming part of an encoder portion of the autoencoder that encodes data into quantum states and modifies these states using quantum gates, whose action is parameterized by the variational parameters. The computation qubits may refer to the qubits used in the quantum circuit based encoder for encoding the information of the multi-feature dataset and for performing computations based on the action of the quantum gates on the computation qubits, also called encoder qubits in the following. In some examples, the variational quantum circuit is implemented in quantum hardware and a processing system may be configured to specify a quantum circuit architecture and/or variational parameters for implementing a portion of the quantum circuit based autoencoder in quantum hardware. As an encoder, the number of inputs passed to the quantum circuit based encoder is smaller than the number of outputs retrieved from the measured output of the quantum circuit based encoder.

The first encoding layer may encode a first subset of the features of the multi-feature dataset in a quantum state of the computation qubits. The first encoding layer of the quantum circuit based encoder may receive a portion of the multi-feature dataset as the first subset of the features and transform it into a quantum state that can be processed by the quantum circuit based on the action of the encoding gates, which act on the quantum state of the computation qubits depending on the respective features in the subset of features. For example, the features may be translated towards a rotation angle of a single qubit gate, wherein the rotation angle may be a pre-defined function of the input feature, e.g. proportional to the input feature.

The variational layer may modify the quantum state of the computation qubits based on a plurality of variational parameters that parameterize the action of variational quantum gates of the variational layer, after the first subset of the features of the multi-feature dataset has been encoded in the computation qubits. This layer may adjust the quantum state based on trainable parameters to optimize the encoding process, such as altering the state based on quantum gate operations, and to perform processing on the encoded quantum state for transforming the quantum state towards a different part of the Hilbert space. The variational quantum gates may equally lead to a state rotation of a respective one of the qubits by angle which is a function of (e.g. proportional to) the corresponding variational parameter.

The second encoding layer encodes a second subset of the features of the multi-feature dataset, different from the first subset, in the quantum state of the computation qubits of the variational quantum circuit after the quantum state has been modified by the action of the variational layer. This layer may take another portion of the dataset and encode it into the quantum state that has already been adjusted by the variational layer. For example, a number of N features of the multi-feature dataset may be partitioned into a number of subsets, each comprising at most M input features, with M corresponding to the number of computation qubits in the quantum circuit based encoder, and each of the subsets may be encoded in the quantum state of the computation qubits based on the action of a different encoding layer, with subsequent encoding layers separated by a variational layer.

Each variational layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates and/or may create a superposition state of all the computation qubits.

After the application of the encoding layers and the variational layers, a projective measurement of the computation qubits can be performed to obtain a latent feature vector, which will generally have a smaller feature number than the corresponding input feature vector of the multi-feature dataset. Projective measurement may refer to the process of measuring quantum states to obtain classical information. The measurement may collapse the quantum state into discrete measured states for forming a latent feature vector that represents the essential features of the input feature vector in a reduced form, e.g. by projective measurement on the basis states of the qubits, implementing a bottleneck in the quantum circuit based autoencoder. The latent feature vector may correspond to a compressed representation of the input vectors from the original dataset with fewer features.

During implementation, a processing system may specify a number of computational qubits of the quantum circuit based encoder and a sequence of quantum gates as part of implementing the quantum circuit based encoder, e.g. as a sequence of control commands controlling an action on the quantum state of the computation qubits, and may receive measured outcomes from the projective measurement on the computation qubits.

The decoder may be configured to receive the latent feature vector generated by the quantum circuit based encoder as an input and to reconstruct the features of the multi-feature dataset from the latent feature vector as an output. The decoder may take the compact representation and expand it back towards the original feature space, allowing for comparison with the initial dataset.

The decoder will generally comprise a trainable transformation of the latent feature vector. In some examples, the decoder is implemented as a classical machine learning model, such as a neural network with trainable machine learning parameters. In some examples, the decoder comprises a quantum circuit for processing the latent feature vector. The output of the decoder will generally correspond to the input feature vector, and may have the same shape as the input feature vector or contain corresponding information.

By training the system, the variational parameters may be systematically varied in an iterative manner, such that the latent feature vector produced by the quantum circuit based encoder best breaks down the particulars of each data point in a training data set, while still allowing a reconstruction of the input feature vector by a jointly trained decoder. The training process may iteratively adjust the variational parameters, e.g. to minimize the difference between the reconstructed features and the original features.

Initial variational parameters for the variational quantum gates can encode an initial (random) guess for the action of the encoding portion, and the outcome of the evaluation of the variational quantum circuit with the variational parameters can be measured (repeatedly) to determine a corresponding latent feature vector. Based on the output vector reconstructed from the latent feature vector by the decoder, a loss function may be classically evaluated to attribute a loss to the reconstructed output vector, corresponding to a measure of how well the output vector represents the original input vector of the multi-feature dataset and/or how well the information in the input feature vector is reconstructed at the output.

Usually, the variable parameters are updated (iteratively) using a feedback-loop implemented in a classical processing system, which may be controlling quantum hardware for circuit evaluations, such that the output vector approaches an optimal solution, i.e. a useful representation of the input feature vector, e.g. identical to or with the same or at least similar information as the input feature vector, making the overall method including the operation of the variational quantum circuit and its control/optimization a hybrid quantum-classical algorithm.

In some examples, training the quantum circuit based autoencoder comprises determining a loss associated with an output feature vector of the quantum circuit based autoencoder for a given input feature vector of a set of training data, and determining an update to the variational parameters of the quantum circuit based autoencoder based on the loss, which may comprise updates to the variational parameters of the quantum circuit based encoder and the machine learning parameters of the decoder.

The trainable parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the trainable parameters with respect to the loss attributed to the output label by the loss function.

The method may leverage quantum properties to efficiently encode and process high-dimensional data for identifying the most impactful features of the multi-feature dataset by determining a contribution score of score features of the input feature vector to the latent features. The contribution score may refer to a measure of the importance or influence of a feature in relation to the latent feature vector. Determining the feature score may involve calculating how much each original feature contributes to the latent representation, providing a measure of its importance in the dataset. For example, a scoring algorithm may analyze the relationship between the original features and the latent features produced by the quantum circuit based encoder to assign a score indicating their relevance.

The architecture of the quantum circuit based encoder leverages the large space available through the Hilbert space to efficiently encode and process high-dimensional data, potentially handling large datasets more effectively than classical approaches, while it may mitigate the barren plateau problem, ensuring the model remains trainable. The feature scores of the scored features may reliably indicate high impact features for non-supervised data reduction and dataset analysis. It is important to highlight that the dataset may be unlabeled and that the system can allow feature selection without human-defined goals, instead identifying the input features, which best distinguish different datapoints of the dataset from each other, while harnessing the specific (quantum) properties of the layered quantum circuit architecture.

In some examples, the method comprises determining a feature score of each of the input features with respect to each latent feature of the latent feature vector, wherein the contribution score is computed based on the feature scores of the input feature to each latent feature of the latent feature vector.

In practical implementations, the determination of feature scores for each input feature with respect to each latent feature may involve statistical or algorithmic techniques that assess the relationship between the original dataset features and the latent features. For example, techniques such as correlation analysis, mutual information, or advanced machine learning algorithms like SHAP (SHapley Additive exPlanations) values could be employed to compute these scores. SHAP values, in particular, offer an interpretable approach by assigning a value to each feature that indicates its contribution to the output, thus providing insight into the significance of each feature in the context of the latent space.

In some examples, the contribution score is a descriptive statistic of the input feature to all latent features of the latent feature vector, in particular the average feature score or the maximum feature score.

The average feature score may be calculated by taking the mean of the scores attributed to the input feature across all latent features of the latent feature vector. For instance, if the input feature has varying degrees of influence on different latent features, the average feature score will reflect the cumulative effect of these influences.

The maximum feature score, on the other hand, identifies the highest score attributed to the input feature among all latent features of the latent feature vector. This measure highlights the peak contribution of the input feature, indicating the maximum extent to which the input feature influences any single latent feature.

In some examples, the features score of the input features for each latent feature are ranked, and a consolidated rank of the input features is based on a function of the different ranks of the input features for the different latent features, such as the sum of the ranks, the average rank or a maximum/minimum rank of the respective input feature for the contributions to different latent features.

In some examples, the contribution score is based on a correlation score quantifying a correlation between the value of the scored feature and the value of one latent feature of the latent feature vector.

For instance, Pearson's correlation coefficient could be employed to determine the correlation score, providing a numerical value that ranges from -1 to 1, where values closer to 1 or -1 indicate a strong positive or negative correlation, respectively.

The incorporation of the correlation score into the contribution score serves to enhance the feature selection process by identifying features that have a significant impact on the latent representation of the dataset. In some examples, the correlation score may be used to prioritize features that exhibit a strong correlation with latent features, thereby ensuring that the most relevant features are selected for further analysis or model training.

In some examples, the contribution score is computed based on a contribution of each feature to each latent feature of the latent feature vector, wherein the contribution score in particular quantifies a difference in the features of the latent feature vector when the respective scored feature is included versus when it is excluded, and is preferably computed as a weighted average of marginal contributions of the scored feature across all possible subsets of features, and/or wherein the contribution score is a SHapley Additive exPlanations value or a mathematical equivalent thereof.

For instance, the contribution score may be calculated using SHAP values. SHAP values are derived from cooperative game theory and provide a way to fairly distribute the total gain (or loss) among all features based on their contributions. By using SHAP values, the method can quantify the contribution of each feature to the latent feature vector in a manner that is both interpretable, non-parametric and consistent across different instances.

In some examples, the decoder is a quantum circuit based decoder and comprises a decoder variational quantum circuit for transforming the latent feature vector towards the output.

The quantum circuit based decoder may be a decoder that utilizes quantum circuits to transform the latent feature vector into the output features of the multi-feature dataset. The decoder variational quantum circuit is a quantum circuit that includes variational parameters parametrizing the quantum gates' actions. The variational quantum circuit in the decoder modifies quantum states in which the latent feature vector is encoded, enabling it to reconstruct the original features of the dataset.

The use of a quantum circuit based decoder aligns with the variational quantum circuit based encoder, aiming to exploit the quantum properties of a quantum circuit based autoencoder to extract meaningful features from high-dimensional datasets. By incorporating a quantum decoder, the method may achieve better performance in terms of feature generalization and reconstruction, ultimately leading to more accurate and interpretable feature scores.

In some examples, the quantum circuit based decoder comprises a first decoder variational quantum circuit and a second decoder variational quantum circuit, wherein each of the first decoder variational quantum circuit and the second decoder variational quantum circuit comprises an encoding gate for encoding a feature in a quantum state of decoder qubits and variational quantum gates for modifying the quantum state of the decoder qubits based on a plurality of decoder variational parameters parametrizing the action of quantum gates.

The first decoder variational quantum circuit and the second decoder variational quantum circuit refer to quantum circuits within the decoder that process the latent feature vector. Each of the circuits include encoding gates, which encode the latent features into a quantum state of respective decoder qubits, and variational quantum gates, which modify this quantum state based on a set of parameters.

The inclusion of both a first and second decoder variational quantum circuit enables a parallelized approach to decoding for reconstructing the large feature space of the input features based on the latent features. Each of the first decoder variational quantum circuit and the second decoder variational quantum circuit may be evaluated separately for reconstructing different features of the latent feature vectors and/or measured outputs of the first decoder variational quantum circuit and the second decoder variational quantum circuit may be combined to reconstruct an input feature vector from the corresponding latent feature vector using the quantum circuit decoder.

In some examples, the first decoder variational quantum circuit and the second decoder variational quantum circuit are independent, wherein quantum gates of the first decoder variational quantum circuit do not act on the decoder qubits of the second decoder variational quantum circuit.

The term "independent" in this context means that the quantum gates of the first decoder variational quantum circuit do not interact with the decoder qubits of the second decoder variational quantum circuit, and vice-versa. This ensures that the operations performed by each decoder are isolated from one another, preventing any interference or entanglement between the two sets of qubits.

For example, one implementation could involve temporally or physically separating the qubits and quantum gates of the two decoders, ensuring that their operations are entirely distinct. Generally, the first decoder qubits and the second decoder qubits may not be entangled with each other, such that measurements of the first decoder qubits are independent of the second decoder quantum circuit and measurements of the second decoder qubits are independent of the first decoder quantum circuit, and associated variational parameters.

In some examples, the first decoder variational quantum circuit and the second decoder variational quantum circuit each are configured to receive latent features of the latent feature vector and to transform the latent features towards different decoder output features obtainable through projective measurement for reconstructing the set of input features.

The independent operation of the decoder variational quantum circuits may improve the scalability of the autoencoder. As the complexity of the dataset increases, having separate decoders allows for parallel processing of the latent feature vector, enabling the processing of large input feature vectors despite strict hardware restrictions regarding the number of qubits available for a computation. Of course, additional circuits, such as a third and a fourth decoder quantum circuit may be provided. In some examples, the number of parallel decoder variational quantum circuits is equal to the number of input features divided by the number of measured outputs of each decoder variational quantum circuit (rounded up), e.g. the number of decoder qubits in each decoder variational quantum circuit.

The skilled person will appreciate that the variational parameters of the decoder variational quantum circuits will generally be different, such as to reconstruct different aspects/features of the original input encoded by the quantum circuit based encoder from the latent features.

In some examples, a number of decoder qubits of the first decoder variational quantum circuit and a number of decoder qubits of the second decoder variational quantum circuit is smaller than a number of computation qubits of the quantum circuit based encoder.

This configuration may be implemented by designing the decoder circuits to use fewer qubits. For instance, if the encoder circuit uses 10 computation qubits, the decoder circuits may use fewer qubits, such as 8 or 9, to achieve the desired functionality.

Since the decoder circuits may be designed for parallel processing and may generally admit an input feature vector size greater than their qubit number, the overall efficiency of the quantum circuit based autoencoder may be increased by reducing the decoder qubit number. On the other hand, larger numbers of encoder qubits may enable a greater number of features encoded per encoding layer, such that a greater qubit number may be beneficial to the encoder part.

In some examples, a cumulative number of decoder output features obtained through projective measurements of the respective decoder qubits of the first decoder variational quantum circuit and the second decoder variational quantum circuit is greater than a number of latent features obtained through projective measurement of the computation qubits of the quantum circuit based encoder.

In general terms, the cumulative number of decoder output features refers to the total count of features that are reconstructed or generated by the decoder after processing the latent features.

In some examples, the first decoder variational quantum circuit and the second decoder variational quantum circuit are configured to receive an identical feature of the latent features as an input, wherein the inputs of the first decoder variational quantum circuit and the second decoder variational quantum circuit are in particular configured to encode the same latent features.

For example, both first decoder variational quantum circuit and the second decoder variational quantum circuit may each receive all feature of the latent feature vector, and the features of the latent feature vector may be encoded, e.g. through depth-infused encoding, similar to the technique used for the quantum circuit based encoder to reconstruct different portions of the original input feature vector.

After the quantum circuit based autoencoder is trained, it may be employed to automatically select features based on the feature scores.

In some examples, the method further comprises automatically selecting an extracted subset of the scored features based on the contribution score and providing a reduced feature dataset based on the extracted subset.

For example, a scoring algorithm such as SHAP (SHapley Additive exPlanations) values may be employed to calculate contribution scores for each feature, and features with the highest SHAP values may be selected to create the reduced feature dataset. Alternatively, other scoring methods such as correlation-based scoring or weight analysis could be used to determine the contribution scores and perform the automatic selection. The top-ranking features may be selected to form the extracted subset.

By automatically selecting the most relevant features based on their contribution scores, the method can focus on the features that have the greatest impact on the latent feature vector generated by the quantum circuit-based autoencoder.

A second aspect provides a quantum circuit based autoencoder, comprising an encoder circuit for encoding a set of input features in a set of latent features, wherein the set of latent features is smaller than the set of input features, and a quantum circuit based decoder for decoding the set of latent features to reconstruct the set of input features, wherein the encoder circuit comprises a quantum circuit based encoder comprising a first encoding layer for encoding a first subset of the input features of the multi-feature dataset in a quantum state of computation qubits of a variational quantum circuit; a variational layer for modifying the quantum state of the computation qubits based on a plurality of variational parameters parametrizing the action of quantum gates of the variational layer, after the first subset of the features of the multi-feature dataset has been encoded in the computation qubits; and a second encoding layer for encoding a second subset of the features of the multi-feature dataset, different from the first subset, in the quantum state of the computation qubits of the variational quantum circuit after the quantum state has been modified by an action of the variational layer; a projective measurement of the computation qubits for obtaining a latent feature vector, the latent feature vector having a smaller feature number than the features of the multi-feature dataset given as an input; and wherein the quantum circuit based decoder comprises a first decoder variational quantum circuit and a second decoder variational quantum circuit, wherein each of the first decoder variational quantum circuit and the second decoder variational quantum circuit comprises an encoding gate for encoding a feature in a quantum state of decoder qubits and variational quantum gates for modifying the quantum state of the decoder qubits based on a plurality of decoder variational parameters parametrizing the action of quantum gates; wherein the first decoder variational quantum circuit and the second decoder variational quantum circuit each are configured to receive latent features of the latent feature vector and to transform the latent features towards different decoder output features obtainable through projective measurement for reconstructing the set of input features, wherein the quantum circuit based autoencoder is trained to reconstruct the input features based on the different decoder output features, when the input features are encoded in the quantum state of the computation qubits of the quantum circuit based encoder.

In this context, the encoder circuit may serve to convert high-dimensional data into a latent space of smaller dimension, utilizing quantum properties to efficiently handle large datasets. The decoder may decompress the latent space back into high-dimensional output, potentially using a combination of quantum and classical neural networks. The architecture of the second aspect may however enable a purely quantum implementation of an autoencoder despite qubit restrictions, providing a highly efficient quantum hardware architecture for autoencoder applications.

The quantum circuit based autoencoder may be advantageously applied in the method of the first aspect, and may benefit from any examples described in conjunction with the method, but may also be employed for classical autoencoder tasks, such as detection of outliers in a dataset.

In some examples, the first decoder variational quantum circuit and the second decoder variational quantum circuit are independent, wherein quantum gates of the first decoder variational quantum circuit do not act on the decoder qubits of the second decoder variational quantum circuit.

In some examples, each of the first decoder variational quantum circuit and the second decoder variational quantum circuit encodes all latent features in the state of its respective decoder qubits.

Functionally, encoding all latent features in the state of the decoder qubits may enhance the reconstruction accuracy of the input features. By ensuring that each decoder variational quantum circuit has access to the complete set of latent features, the autoencoder may achieve a more precise transformation of latent features back into the original input features. This comprehensive encoding may prevent the loss of critical information during the decoding process, thereby improving the fidelity of the reconstructed dataset.

In some examples, a number of decoder qubits of the first decoder variational quantum circuit and the second decoder variational quantum circuit is smaller than a number of computation qubits of the quantum circuit based encoder.

In some examples, a cumulative number of decoder output features obtained through projective measurements of the respective decoder qubits of the first decoder variational quantum circuit and the second decoder variational quantum circuit is greater than the feature number of latent features obtained through projective measurement of the computation qubits of the quantum circuit based encoder.

In some examples, the first decoder variational quantum circuit and the second decoder variational quantum circuit are configured to receive an identical latent feature of the latent features as an input, wherein the inputs of the first decoder variational quantum circuit and the second decoder variational quantum circuit are in particular configured to encode the same latent features.

The quantum circuit based autoencoder may be implemented using a classical processing system which controls quantum hardware based on a sequence of control commands, which initialize qubits, apply a sequence of quantum gates to quantum states of the qubits (based on variational parameters and encoded features), and perform measurement. The processing system may receive measured outputs from measuring the quantum state of the qubits and may determine output vectors and/or variational parameter updates.

A third aspect provides a feature extraction system comprising the quantum circuit based autoencoder of the second aspect, further comprising a training module configured to train the quantum circuit based autoencoder to reproduce features of a multi-feature dataset at its output, and optionally further a scoring module configured to determine a feature score for a scored feature of a multi-feature dataset based on a contribution score between the scored feature and the latent feature vector for each feature passed as an input to the autoencoder during training, wherein the contribution score quantifies the contribution of the scored feature to the latent feature vector, and preferably comprises a correlation matrix score, a SHapley Additive exPlanations value, or a mathematical equivalent thereof.

The training module may be a software or hardware component that facilitates the learning process of a machine learning model. It may provide the necessary algorithms and data for the model to learn and improve its performance. For example, a training module may use backpropagation and gradient descent techniques to optimize the autoencoder's parameters.

The scoring module may be a component that evaluates the importance of features in a dataset. It may use various algorithms to assign scores to features based on their contribution to the model's performance. An example of a scoring module may be one that uses SHapley Additive exPlanations (SHAP) values to measure the impact of each feature on the model's output.

The multi-feature dataset may be a collection of data points with multiple attributes or features. It may be used in machine learning to train models and extract meaningful information. An example of a multi-feature dataset may be a dataset containing information about different characteristics of a group of individuals, such as age, height, weight, and income.

A correlation matrix score may be a numerical value that represents the strength and direction of the relationship between two variables. It may be used to identify the most relevant features in a dataset. An example of a correlation matrix score may be the Pearson correlation coefficient.

A fourth aspect provides a computer program comprising machine readable instructions, which when the computer program is executed by a processing system cause the processing system to implement a method according to the first aspect and/or to implement a system according to the second aspect or the third aspect.

The computer program may be designed to work with a processing system, which may include components such as a processor, memory, and input/output interfaces. When executed, the program may perform specific tasks or operations that correspond to the method or system outlined in the referenced implementations. Machine-readable instructions refer to code or commands that a computer system can interpret and execute. These instructions may be written in programming languages such as Python, Java, or C++. The processing system may be a computer, server, or any device capable of running the program. The execution of the program may involve processing data, performing calculations, or controlling hardware components.

An example of this interaction may be a computer program designed to implement a quantum circuit based autoencoder by controlling quantum hardware. When executed, the program may cause the processing system to preprocess data, encode it by sending commands to a quantum system control hardware for instancing the quantum circuit and performing a forward pass, receive measured data, determine latent features, apply a scoring algorithm to rank input features, and evaluate selected features for prediction purposes.

A further unclaimed aspect of the disclosure applies the method of the first aspect with a classical autoencoder architecture without a quantum circuit based encoder.

### LIST OF FIGURES

In the following, a detailed description of the present disclosure and examples thereof is given with reference to the figures.
Figure 1: shows a schematic example of an autoencoder system.
Figure 2A: shows a schematic example of a quantum circuit based encoder with multiple encoding layers and trainable parameters.
Figure 2B: shows a schematic example of a quantum circuit based decoder with multiple parallel sub-circuits for processing input features, including trainable and encoding components.
Figure 3: shows a schematic flowchart of a method for determining a feature score for a scored feature of a multi-feature dataset using a quantum circuit based autoencoder.
Figure 4: shows a schematic flowchart of a method for preprocessing, encoding, scoring, and evaluating feature selections from a dataset.
Figure 5A: shows a schematic flowchart of SHAP analysis for automated feature extraction.
Figure 5B: shows a schematic example of a correlation analysis process for feature extraction.
Figure 6: shows an example of a prediction error resulting from the use of different subsets of variables of a multi-feature dataset, the subset being automatically extracted based on an input features score in view of latent features obtained with a quantum circuit based autoencoder.
Figure 7: shows an example of a comparison of the prediction error for different subsets of variables using classical and quantum methods.

### DESCRIPTION OF EXAMPLES

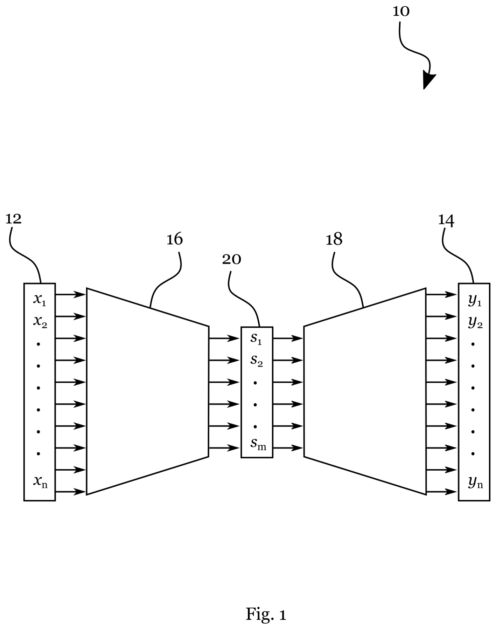

Figure 1 illustrates a schematic representation of an autoencoder 10 for transforming an input feature vector 12 towards an output feature vector 14. The system 10 comprises an encoder 16, and a decoder 18, wherein the encoder 16 is configured to receive the input feature vector 12 and to transform the input feature vector 12 towards a latent feature vector 20. The decoder 18 is configured to receive the latent feature vector 20 and to generate the output feature vector 14.

The input feature vector 12 may generally be composed of a set of input features x₁, x₂, ..., xₙ from a multi-feature dataset. These input features can be fed into the encoder 16, which processes the high-dimensional data according to a trainable (encoding) transformation to form the latent feature vector 20 with features s₁, s₂, ..., sₘ, wherein the number m of features of the latent feature vector 20 is smaller than the number n of features of the input feature vector 12.

The decoder 18 is configured to apply another trainable (decoding) transformation on the latent feature vector 20, with the goal to reconstruct the information of the input feature vector 12 at the output feature vector 14 with high-dimensional output features y₁, y₂, ..., yₙ, which should generally match the input feature vector 12. By training the autoencoder system 10 with the goal of reconstructing the input feature vector 12 at the output feature vector 14, the trainable transformations of the encoder 16 and the decoder 18 are optimized to best generate latent features which enable to reconstruct the input feature vector 12 after projection onto a low dimensionality latent space, effectively reducing the dimensionality while preserving meaningful information on the distinctive aspects of the respective datapoints in the original multi-feature dataset.

In a quantum circuit based autoencoder 10, the encoder 16 can employ a quantum variational circuit to encode the features of the input feature vector 12 into a quantum state of encoder qubits. This quantum state of the encoder qubits can then be modified by a variational layer within the encoder 16 comprising a plurality of variational quantum gates, which adjusts the quantum state based on a plurality of variational parameters parametrizing the respective action of corresponding variational quantum gates. Multiple encoding layers may be sequentially used in between applications of the variational quantum layer for encoding multiple subsets of the input features with a given number of encoder qubits .

The processed quantum state of the encoder qubits may then be then subjected to a projective measurement, e.g. a Z-axis projection on the Bloch sphere, for obtaining a latent feature vector 20 with latent features s1, s2, ..., sm. Generally, the latent feature may be a function of the measured quantum states of the encoder qubits, which may be measured in the computational basis states of the encoder qubits in the measurement basis. In some examples, the measured quantum states indicate a probability of each of the qubits being in a ground or excited state, and each latent feature may be obtained based on the measured probability of one of the encoder qubits. The latent feature vector 20 has a smaller feature number than the input feature vector 12 from the original multi-feature dataset, which can be encoded through quantum depth infused encoding in the Hilbert space spanned by the qubits, effectively reducing the dimensionality while preserving meaningful information.

The latent feature vector 20 can be subsequently fed into the decoder 18 as a set of classical values. The decoder 18 may comprise a quantum circuit-based decoder that also includes variational quantum circuits. These circuits transform the latent features back towards the output feature vector 14. The output feature vector 14 should ideally match the original input features provided as the input feature vector 12. The training of the autoencoder 10 involves updating the trainable parameters of the encoder 16 and the decoder 18 based on a cost function that evaluates the reconstruction accuracy of the output features in comparison to the input feature vector.

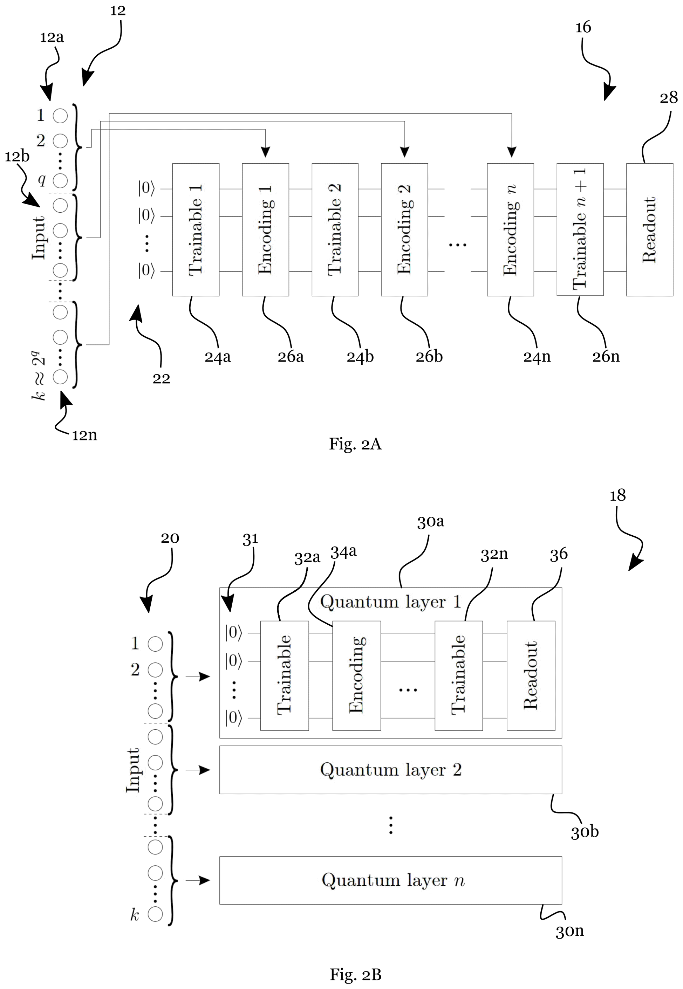

Figure 2A illustrates an example of a Quantum Depth Infused (QDI) layer architecture for implementing a quantum circuit based encoder 16 based on a plurality of encoder qubits 22. The input feature vector 12 is composed of a plurality of feature subsets labeled from 12a to 12n, where each feature subset comprises a plurality of input features, which may be the same number "q" for each subset (e.g. up to the last the last subset 12n). The subsets of input features 12a-12n may be different parts of the input feature vector 12, e.g. with the input feature vector 12 separated into subsets of input features 12a-12n of equal length, wherein the length may correspond to the number of encoder qubits 22. The input features are encoded into the quantum states of encoder qubits 22, which are subsequently processed by the quantum circuit based encoder 16.

Specifically, the quantum circuit based encoder 16 begins with an initialization stage, where the encoder qubits 22 are set to a predefined state, typically the ground state |o〉. Following initialization, the quantum circuit based encoder 16 proceeds through a series of trainable encoder variational layers 24a-24n and encoding layers 26a-26n. The first encoder variational layer 24a applies a set of quantum gates to the encoder qubits 22, modifying their quantum states based on variational parameters parametrizing the action of a corresponding variational quantum gate. The first encoding layer 26a encodes a first subset of input features 12a into the modified quantum states of the encoder qubits 22, with the quantum gates of the first encoding layer 26a being parametrized by corresponding features of the first subset of input features 12a.

The processing sequence defined by the quantum circuit architecture continues with additional encoder variational layers 24b-24n and encoding layers 26b-26n, labeled sequentially from 24b and 26b up to 24n and 26n, and which are applied to the encoder qubits 22 in alternating sequence. Each trainable layer further adjusts the quantum states using respective variational parameters, which are generally different from the variational parameters of the preceding encoder variational layers 24a-24n, while each encoding layer 26a-26n encodes different subsets of the input features 12b-12n into the encoder qubits 22. This iterative process allows the quantum circuit based encoder 16 to handle a large number of input features by progressively modifying and encoding the quantum states, with the encoder variational layers 24a-24n modifying the effective part of the Hilbert space in which the features are encoded.

After the application of the plurality of encoder variational layers 24a-24n and encoding layers 26a-26n the quantum state of the encoder qubits 22 is measured by an encoder projective measurement 28. The projective measurement 28 may project the quantum state of each encoder qubit 22 onto a pre-defined measurement basis (e.g. along the Z-axis of the Bloch sphere), and the probabilities of measuring the respective encoder qubits 22 in the excited (ground) state after repeated evaluation of the quantum circuit based encoder 16 may be recorded as features of the latent feature vector 20. The latent feature vector 20 has a smaller feature number compared to the original multi-feature dataset, with the projective measurement 28 creating a bottleneck for the information encoded by the variational quantum circuit based encoder 16 in the quantum state of the encoder qubits 22. Of course, any combination of projective measurements and transformations may be established for translating measurable outcomes of measuring the quantum states of the encoder qubits 22 to the features of the latent feature vector 20. This (classical) latent feature vector 20 may then be used for subsequent processing, such as decoding or feature scoring.

The QDI layer architecture illustrated with the example of Fig. 2A efficiently utilizes the available qubits by employing a lattice structure and data re-uploading method. This approach enables the encoding of a large number of features into a manageable number of encoder qubits 22, mitigating the barren plateau problem and facilitating the training of the quantum model. Features of the input feature vector 12 may be encoded multiple times, e.g. in multiple encoding layers 26a-26n, such as to increase an expressiveness of the quantum circuit based encoder 16 for the respective input features.

Figure 2B illustrates the architecture of a quantum circuit based decoder 18 for a quantum circuit based autoencoder 10. The input features for the decoder 18 will generally comprise or be composed of the latent feature vector 20 obtainable through the action of the encoder 16 on the input feature vector 12.

The decoder 18 comprises a plurality of decoder layers 30a-30n, which are configured to be independently executed, e.g. in parallel from each other, and which may act on the same or different features from the latent feature vector 20. In some examples, each of the decoder layers 30a-30n receives all features of the latent feature vector 20 as an input for encoding in respective decoder qubits 31 of each decoder layer 30a-30n.

The decoder layers 30a-30n may have the same or different quantum circuit architectures, but for the following discussion, a common quantum circuit architecture for the decoder layers 30a-30n will be assumed, exemplified with a first decoder layer 30a (labelled "Quantum layer 1").

The first decoder layer 30a receives a portion of or all features of the latent feature vector 20 and applies decoder variational layers 32a-32n and decoder encoding layers 34a-n to initialized decoder qubits 31, e.g. in the state |o〉, to encode and process the latent feature vector 20.

The first sub-component within the first decoder layer 30a may be a trainable decoder variational layer 32a, which applies trainable quantum gates to the decoder qubits 31 parametrized by corresponding variational parameters. Following this, the decoder encoding layer 34a may encode the input features into the quantum state of the decoder qubits 31, which may be all input features for the first decoder layers 30a, or a portion thereof (e.g. as many as there are decoder qubits 31). This sequence of a decoder variational layer 32a-32n followed by a decoder encoding layer 34a-34n may be repeated multiple times to access a greater Fourier space for the input (latent) features through data-reuploading. The final sub-component in the first decoder layer 30a is the decoder projective measurement 36, which performs projective measurements on the decoder qubits 31 to obtain output features for constructing the output feature vector 14.

The multiple decoder layers 30a-30n may be executed, e.g. in parallel or sequentially on the same physical set of decoder qubits 31, with each decoder layer 30a-30n being associated with independently trainable variational layers, with the respective decoder qubits 31 not being affected by the action of any of the other decoder layers 30a-30n. The respective measured outputs obtainable from each of the decoder layers 30a-30n may be collected, e.g. through repeated measurement of each of the decoder layers 30a-30n and collection of the results of measuring the state of the decoder qubits 31, and the output feature vector 14 may be reconstructed from the outputs from the plurality of decoder layers 30a-30n. In some examples, the outputs from the different decoder layers 30a-30n may be combined through the use of a combination function, which may be trainable, e.g. comprising a classical neural network.

The parallel processing capability through the use of multiple independent decoder layers 30a-30n can enable the system to handle a large number of output features with a limited size of a decoder quantum circuit 18 in terms of an efficiently usable number of decoder qubits 31.

A quantum circuit based autoencoder 10 based on the quantum circuit based encoder 16 and optionally the quantum circuit based decoder 18 may be trained by executing the autoencoder 10 for input feature vectors 12 from a multi-feature training dataset, and the trainable variational parameters of the encoder 16 and the decoder 18 may be updated, such that the output feature vector 14 is equal to or contains corresponding information with respect to the input feature vector 12. The trainable parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the trainable parameters with respect to the loss attributed to the output label by the loss function.

The trained quantum circuit autoencoder 10 was found to enable robust unsupervised feature selection of complex datasets by using feature scores for the latent features generated through application of the quantum circuit based encoder 16.

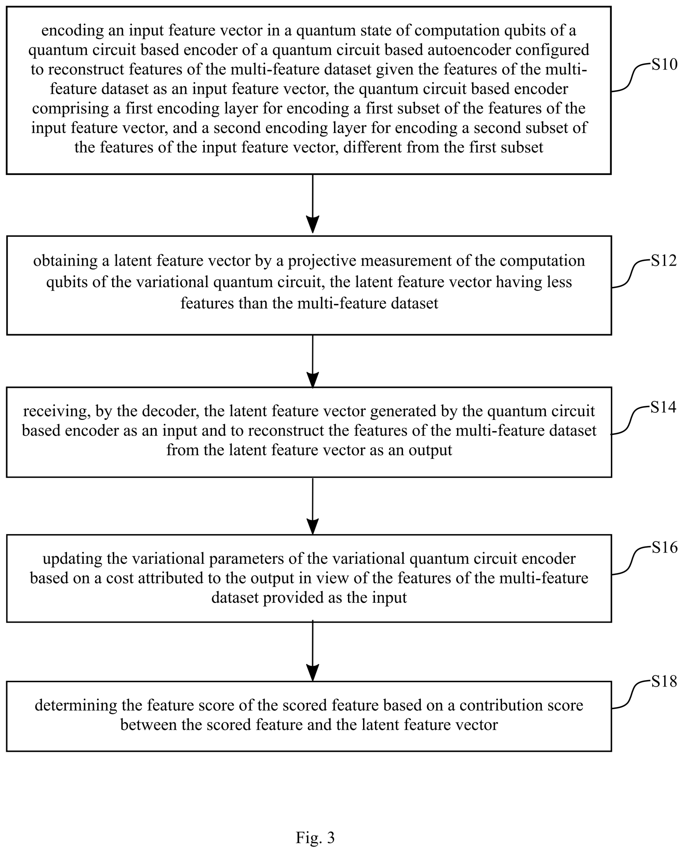

Figure 3 illustrates an example flowchart detailing the process of determining a feature score for a scored feature within a multi-feature dataset using a quantum circuit-based autoencoder 10. The process begins with step S10, where an input feature vector 12 is encoded into a quantum state of computation qubits 22 within a quantum circuit based encoder 16. The encoder 16 is part of the quantum circuit-based autoencoder 10 designed to reconstruct features of the multi-feature dataset at an output of a decoder 18. The quantum circuit based encoder 16 comprises a first encoding layer 26a for encoding a first subset of the features 12a from the input feature vector 12, and a second encoding layer 26b configured to encode a second subset of features 12b from the input feature vector 12, distinct from the first subset 12a. In between the encoding layers 26a, 26b, the quantum circuit based encoder 16 comprises variational layers 24a-24n for processing the quantum state of the computation qubits 22.

Following the application of the quantum gates of the quantum circuit based encoder 16, step S12 involves obtaining a latent feature vector 20 through projective measurement of the computation qubits 22. The latent feature vector 20 is characterized by having fewer features than the input feature vector 12 constructed from the features of the original multi-feature dataset, effectively reducing the dimensionality of the data while retaining essential information.

In step S14, the decoder 18 receives the latent feature vector 20 generated by the quantum circuit based encoder 16. The decoder 18 is configured to reconstruct the features of the multi-feature dataset from the latent feature vector 20 as an output feature vector 14, serving as the output of the autoencoder 10.

Step S16 involves updating the variational parameters of the quantum circuit based encoder 16. This update is based on a cost attributed to the output feature vector 14, which is assessed in relation to the features of the multi-feature dataset provided as the input feature vector 12.

Finally, step S18 comprises determining the feature score of the scored feature. This determination is based on a contribution score, which quantifies the relationship between the scored feature and the latent feature vector. The contribution score may provide insight into the significance of each input feature in the context of the latent representation, allowing for the ranking and selection of the most relevant features within the dataset for constructing the latent feature vector.

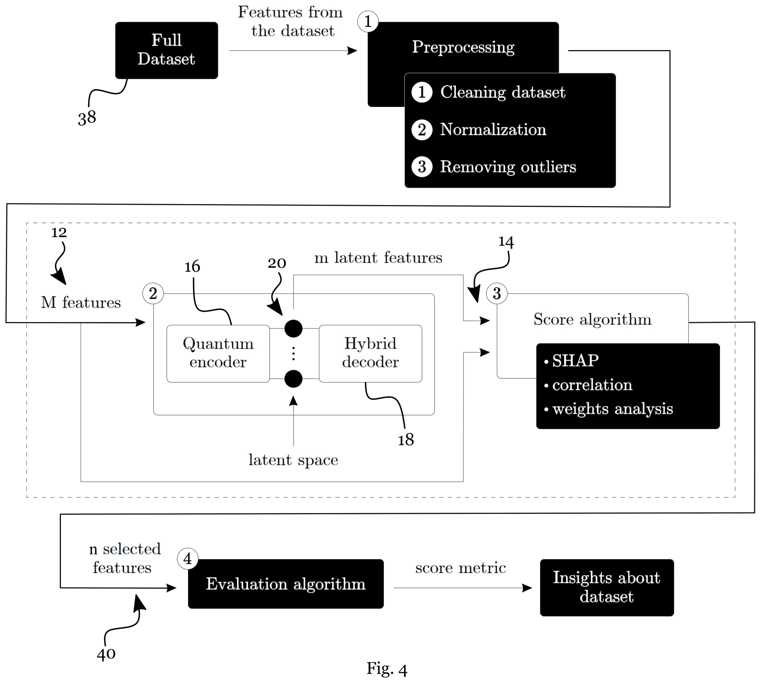

Figure 4 illustrates a schematic flowchart for feature selection using an autoencoder 10 based processing system. The process begins with the full dataset 38, which may undergo preprocessing to prepare the data for further analysis, e.g. involving cleaning the dataset, normalization, and removing outliers, ensuring that the data is in an optimal state for feature extraction.

Following preprocessing, the encoder 16 receives M features from the dataset as an input feature vector 12. The encoder 16 is configured for transforming high-dimensional data into a latent space, which is characterized by m latent features 20, with m<M, reducing the dimensionality of the data while retaining essential information.

The decoder 18 then processes the latent features to reconstruct the dataset, ensuring that the latent space is accurately decompressed into high-dimensional output as an output feature vector 14. The decoder 18 may combine quantum and classical neural network layers, and may enhance computational capacity by running multiple quantum circuits in parallel. The latent space serves as a compact representation of the original dataset, encapsulating the most critical characteristics distinguishing different data points from each other.

The score algorithm is applied to the original features and those extracted by the autoencoder 10 as the latent feature vector 20. This algorithm assigns a score to each input feature, enabling their ranking. The scoring algorithm can be implemented using various methods such as SHAP, correlation, or weights analysis. The selection of n most important features may be achieved by identifying the n features with the highest scores.

Finally, the evaluation algorithm may process the n selected features 40, providing insights about the dataset based on a score metric. This evaluation can be performed through various methods, including machine learning models, e.g. to predict the values of a target variable based on the reduced set of automatically selected features and recording the RMSE of the prediction of the target variable as a score metric for the quality of the selection.

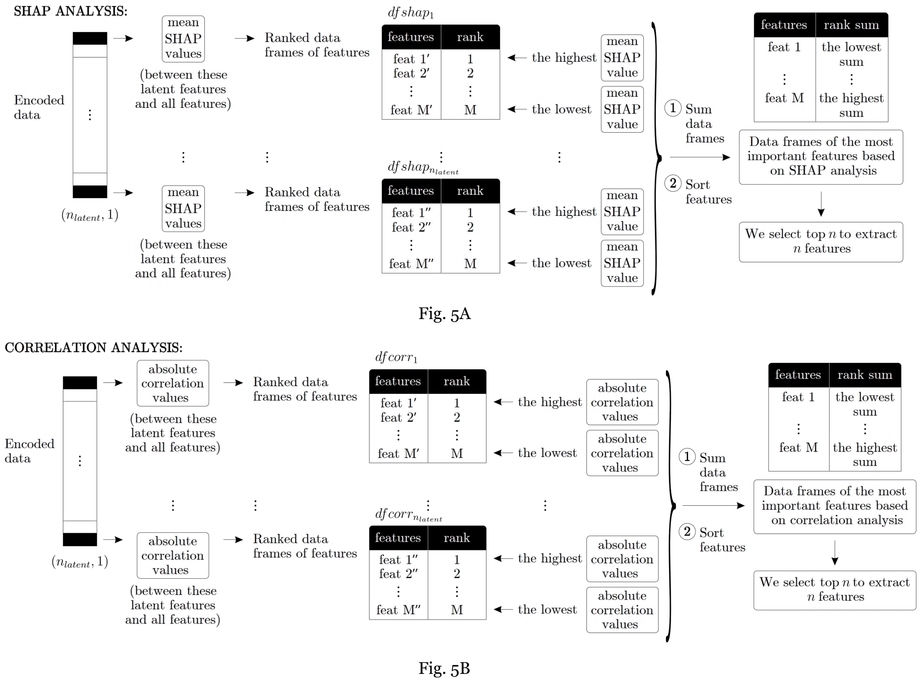

Figure 5A illustrates an example of a SHAP analysis process as part of a scoring algorithm for determining the importance of features within a dataset. The encoded data, represented as a column latent feature vector 20 with nₗₐₜₑₙₜ rows and a single column, is first subjected to SHAP value computation. The mean SHAP values are calculated between each latent feature and all input features. This step is repeated for each latent feature, resulting in multiple sets of mean SHAP values, with the mean SHAP value of each latent feature of the latent feature vector 20 recorded for each input feature of the input feature vector 12, and the values organized into sets, with each set corresponding to the obtained values for a selected latent feature.

Each set of mean SHAP values is then used to create ranked data frames of features. These ranked data frames, denoted as *df shap₁* through *df shap nₗₐₜₑₙₜ,* list the input features along with their respective ranks based on the respective SHAP values in relation to each other, with each ranked data frame corresponding to one of the latent features. The highest SHAP value corresponds to the rank of 1, indicating the most important input feature for that latent feature, while the lowest SHAP value corresponds to the rank of M, indicating the least important feature.

The next step involves determining a consolidated rank of each of the input features, e.g. by summing the ranks from all data frames as illustrated in the example of Fig. 5A. This summation process aggregates the ranks for each input feature across all latent features, producing a cumulative rank sum for each feature. The input features are then sorted based on their rank sums, resulting in a final data frame that lists the features in order of importance based on the SHAP analysis over all latent features. Alternatively or additionally, the average or lowest/highest rank in the ranked data frames may be recorded for each of the input features as an average/maximum/minimum rank for each of the input features throughout the ranked data frames. In some examples, the SHAP values for each of the input features are directly summed, averaged or subjected to a maximum/minimum value analysis for obtaining a consolidated rank of the input features.

The final data frame, which contains the input features and their consolidated rank (e.g. rank sum as in the illustrated example), is used to identify the most important features. The top n features with the top consolidated rank scores (e.g. lowest rank sums) are selected for extraction. This selection process ensures that the most relevant features, as determined by the SHAP analysis, are automatically chosen for further analysis or model training. It is noted that the process does not rely on human supervision and may be executed in an unsupervised manner and independently of dataset labeling.

It was found that the use of encoders, in particular quantum circuit based encoders, to determine latent features and a ranking scheme based on a scoring function of the input features in view of the latent features could effectively select data features best characterizing the particulars of the data set without human intervention. SHAP value based consolidated ranks was found to provide effective automated feature selection, enabling the automated reduction of a dataset while retaining the original features for interpretability. As a result, an automatic, robust and interpretable way to identify the most important features in a dataset can be provided.

Figure 5B illustrates an alternative feature scoring algorithm based on a correlation analysis process for feature selection within a Quantum Hybrid Feature Selector QHFS, which is generally similar in structure to the example given in Fig. 5A, with a quantum circuit based encoder layer for constructing a latent feature vector 20 based on an input feature vector 12 from the multi-feature dataset. The encoded data, represented as a matrix with dimensions nₗₐₜₑₙₜ, 1, serves as the input for the correlation analysis. This matrix contains latent features derived from the original dataset through the autoencoder 10.

The first step involves calculating the absolute correlation values between each latent feature and all features in the original dataset. These correlation values quantify the relationship between the latent features and the original features. The absolute correlation values are then again used to rank the original features, generating ranked data frames for each latent feature. Each ranked data frame, denoted as *df corr₁, df corr₂, ..., df corr nₗₐₜₑₙₜ,* lists the original features along with their corresponding ranks based on the correlation values for each of the latent features.

The ranked data frames are then processed to identify the highest and lowest absolute correlation values for each latent feature. The ranked data frames are subsequently summed to create a consolidated rank sum for each original feature. This summation aggregates the ranks across all latent features, providing a comprehensive measure of each feature's overall importance in relation to the latent features. The skilled person will appreciate that other functions for determining a consolidated rank of each input feature may be employed instead of the summation of the ranked data frames, as discussed in conjunction with the example of Fig. 5A.

The next step involves sorting the features based on their rank sums to determine a sorted list of final consolidated ranks for each input feature, representing the input features that have the most significant correlations with the latent features, indicating their relevance in the dataset.

Finally, the top n features are selected based on the sorted rank sums, as in the previous example. The selected features can then be used for further analysis or prediction tasks, lever-aging their importance as determined by the correlation analysis.

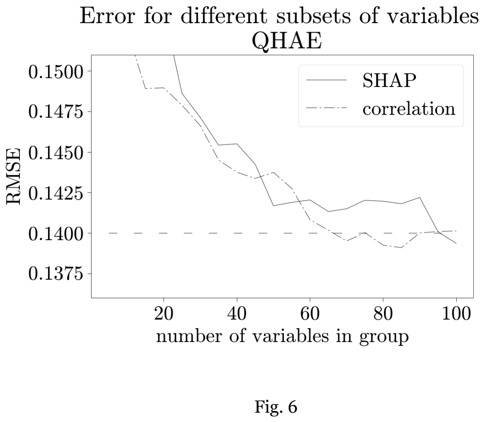

Figure 6 illustrates evaluation results for the above described process for reducing the number of features from multi-feature dataset, when the remaining features are used to predict the normalized crime rate in US Communities based on socio-economic data, with the original data taken from the Communities and Crime Dataset ("Redmond, M. (2002). Communities and Crime [Dataset]. UCI Machine Learning Repository. https://doi.org/10.24432/C53W3X"). The original 127 features were processed by removing zero variance features and several features with high presence of outliers and by applying MinMax normalization, resulting in 99 normalized features for predicting the normalized crime rate with a random forest machine learning prediction algorithm.

The graph illustrates the Root Mean Squared Error (RMSE) of the predicted crime rate using the random tree prediction algorithm in view of the actual value in the dataset (y-axis) as a function of the number of features retained for the prediction task (x-axis), ranging from 20 to 100. The different lines indicate the obtained values when the dataset is reduced based on different scoring algorithms for scoring the input features in view of the latent features obtained with an autoencoder 10.

The solid line represents a feature selection with a quantum circuit based autoencoder 10 based on the SHAP scoring algorithm, which calculates the SHapley Additive exPlanations values for the latent feature vectors to determine a measure of importance of each input feature for characterizing a datapoint in the dataset, and selects the corresponding features as illustrated in Fig. 5A.

The dashed line corresponds to a feature selection with a quantum circuit based autoencoder 10 based on the correlation scoring algorithm. This approach assesses the importance of features based on their correlation with latent features generated by the autoencoder 10, as illustrated in Fig. 5B.

The dashed horizontal line provides a base line based on the use of all features in the prediction model, indicating that the quantum circuit based autoencoder 10 in combination with a scoring algorithm can efficiently select the most important features in a dataset in an unsupervised manner.

Overall, Figure 6 demonstrates that both scoring algorithms - SHAP and correlation matrix based - enable an efficient reduction of the number of variables to about 60 features without significant loss of prediction accuracy.

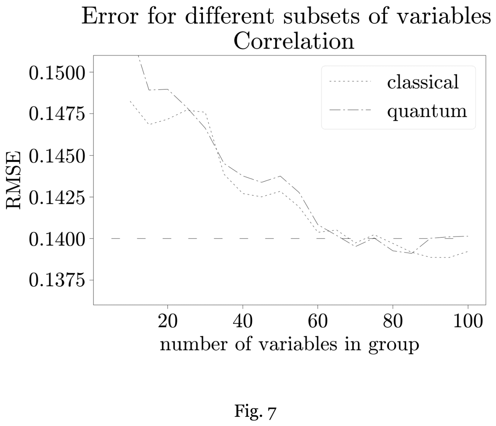

Figure 7 illustrates a similar graph as shown in Fig. 6, with the algorithm using a quantum circuit based encoder ("quantum") or a classical neural network based autoencoder ("classical") applied to the same purpose both using a scoring matrix based scoring algorithm as illustrated in Fig. 5B. The vertical axis again represents the Root Mean Square Error, RMSE, for the predicted crime rate, while the horizontal axis denotes the number of variables retained for the prediction, ranging from 20 to 100.

The classical machine learning based method is depicted with a dotted line, while the quantum circuit based method is shown with a dash-dot line. Both lines exhibit a trend of decreasing RMSE as the number of variables in the group increases, indicating that the error reduces when more variables are considered in the correlation analysis.

The graph shows that after a certain point, around 60 variables, the RMSE for both methods starts to stabilize, indicating diminishing returns in error reduction with the addition of more variables. The quantum method maintains a slight advantage over the classical method throughout the higher number of variables, which may indicate higher robustness and efficiency in handling high-dimensional data, while providing at least comparable performance at small numbers of retained variables.

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. A computer-implemented method for determining a feature score for a scored feature (40) of a multi-feature dataset with a quantum circuit based autoencoder (10), comprising
Training the quantum circuit based autoencoder (10) to reconstruct features of the multi-feature dataset given the features of the multi-feature dataset as an input, wherein the quantum circuit based autoencoder (10) comprises a quantum circuit based encoder (16) and a decoder (18), the quantum circuit based encoder (16) comprising:
a first encoding layer (26a) for encoding a first subset of the features (12a) of the multi-feature dataset in a quantum state of computation qubits (22) of a variational quantum circuit;
a variational layer (24a-n, 32a-n) for modifying the quantum state of the computation qubits (22) based on a plurality of variational parameters parametrizing the action of quantum gates of the variational layer (24a-n, 32a-n), after the first subset of the features (12a) of the multi-feature dataset has been encoded in the computation qubits (22); and
a second encoding layer (26b) for encoding a second subset of the features (12b) of the multi-feature dataset, different from the first subset, in the quantum state of the computation qubits (22) of the variational quantum circuit after the quantum state has been modified by an action of the variational layer (24a-n, 32a-n);
a projective measurement (28, 36) of the computation qubits (22) for obtaining a latent feature vector (20), the latent feature vector (20) having a smaller feature number than the features of the multi-feature dataset given as an input ;
wherein the decoder (18) is configured to receive the latent feature vector (20) generated by the quantum circuit based encoder (16) as an input and to reconstruct the features of the multi-feature dataset from the latent feature vector (20) as an output, and
wherein training the autoencoder (10) comprises updating the variational parameters of the quantum circuit based encoder (16) based on a cost attributed to the output in view of the features of the multi-feature dataset provided as the input; and
determining the feature score of the scored feature (40) based on a contribution score between the scored feature (40) and the latent feature vector (20) using the quantum circuit based autoencoder (10).

2. The method of claim 1, wherein the method comprises determining a feature score of each of the input features with respect to each latent feature of the latent feature vector (20), wherein the contribution score is computed based on the feature scores of the input feature to each latent feature of the latent feature vector (20)
wherein the contribution score is in particular a descriptive statistic of the input feature to all latent features of the latent feature vector (20), preferably the average feature score or the maximum feature score.

3. The method of any one of the preceding claims, wherein the contribution score is based on a correlation score quantifying a correlation between the value of the scored feature (40) and the value of one latent feature of the latent feature vector (20).

4. The method of any one of the preceding claims, wherein the contribution score is computed based on a contribution of each feature to each of the features of the latent feature vector (20), wherein the contribution score in particular quantifies a difference in the features of the latent feature vector (20) when the respective scored feature (40) is included versus when it is excluded, and is preferably computed as a weighted average of marginal contributions of the scored feature (40) across all possible subsets of features, and/or wherein the contribution score is a SHapley Additive exPlanations value or a mathematical equivalent thereof.

5. The method of any one of the preceding claims, wherein the decoder (18) is a quantum circuit based decoder (18) and comprises a decoder variational quantum circuit for transforming the latent feature vector (20) towards the output.

6. The method of claim 5, wherein the quantum circuit based decoder (18) comprises a first decoder variational quantum circuit (30a) and a second decoder variational quantum circuit (30b), wherein each of the first decoder variational quantum circuit (30a) and the second decoder variational quantum circuit (30b) comprises an encoding gate for encoding a feature in a quantum state of decoder qubits (31) and variational quantum gates for modifying the quantum state of the decoder qubits (31) based on a plurality of decoder variational parameters parametrizing the action of quantum gates;
wherein the first decoder variational quantum circuit (30a) and the second decoder variational quantum circuit (30b) are in particular independent, wherein quantum gates of the first decoder variational quantum circuit (30a) do not act on the decoder qubits (31) of the second decoder variational quantum circuit (30b).

7. The method of claim 6, wherein the first decoder variational quantum circuit (30a) and the second decoder variational quantum circuit (30b) each are configured to receive latent features of the latent feature vector (20) and to transform the latent features towards different decoder output features obtainable through projective measurement (28, 36) for reconstructing the set of input features.

8. The method of claim 6 or 7, wherein a number of decoder qubits (31) of the first decoder variational quantum circuit (30a) and a number of decoder qubits (31) of the second decoder variational quantum circuit (30b) is smaller than a number of computation qubits (22) of the encoder variational quantum circuit.

9. The method of any one of claim 6 to 8, wherein a cumulative number of decoder output features obtained through projective measurements (28, 36) of the respective decoder qubits (31) of the first decoder variational quantum circuit (30a) and the second decoder variational quantum circuit (30b) is greater than a number of latent features obtained through projective measurement (28, 36) of the computation qubits (22) of the encoder variational quantum circuit; and/or
wherein the first decoder variational quantum circuit (30a) and the second decoder variational quantum circuit (30b) are configured to receive an identical feature of the latent features as an input, wherein the inputs of the first decoder variational quantum circuit (30a) and the second decoder variational quantum circuit (30b) are in particular configured to encode the same latent features.

10. The method of any one of the preceding claims, wherein the method further comprises automatically selecting an extracted subset of the scored features (40) based on the contribution score and providing a reduced feature dataset based on the extracted subset.

11. A quantum circuit based autoencoder (10), comprising an encoder circuit for encoding a set of input features in a set of latent features, wherein the set of latent features is smaller than the set of input features, and a quantum circuit based decoder (18) for decoding the set of latent features to reconstruct the set of input features,
wherein the encoder circuit comprises a quantum circuit based encoder (16) comprising
a first encoding layer (26a) for encoding a first subset of the input features of the multi-feature dataset in a quantum state of computation qubits (22) of a variational quantum circuit;
a variational layer (24a-n, 32a-n) for modifying the quantum state of the computation qubits (22) based on a plurality of variational parameters parametrizing the action of quantum gates of the variational layer (24a-n, 32a-n), after the first subset of the features (12a) of the multi-feature dataset has been encoded in the computation qubits (22); and
a second encoding layer (26b) for encoding a second subset of the features (12b) of the multi-feature dataset, different from the first subset, in the quantum state of the computation qubits (22) of the variational quantum circuit after the quantum state has been modified by an action of the variational layer (24a-n, 32a-n);
a projective measurement (28, 36) of the computation qubits (22) for obtaining a latent feature vector (20), the latent feature vector (20) having a smaller feature number than the features of the multi-feature dataset given as an input; and
wherein the quantum circuit based decoder (18) comprises a first decoder variational quantum circuit (30a) and a second decoder variational quantum circuit (30b), wherein each of the first decoder variational quantum circuit (30a) and the second decoder variational quantum circuit (30b) comprises an encoding gate for encoding a feature in a quantum state of decoder qubits (31) and variational quantum gates for modifying the quantum state of the decoder qubits (31) based on a plurality of decoder variational parameters parametrizing the action of quantum gates;
wherein the first decoder variational quantum circuit (30a) and the second decoder variational quantum circuit (30b) each are configured to receive latent features of the latent feature vector (20) and to transform the latent features towards different decoder output features obtainable through projective measurement (28, 36) for reconstructing the set of input features,
wherein the quantum circuit based autoencoder (10) is trained to reconstruct the input features based on the different decoder output features, when the input features are encoded in the quantum state of the computation qubits (22) of the encoder variational quantum circuit.

12. The quantum circuit based autoencoder (10) of claim 11, wherein the first decoder variational quantum circuit (30a) and the second decoder variational quantum circuit (30b) are independent, wherein quantum gates of the first decoder variational quantum circuit (30a) do not act on the decoder qubits (31) of the second decoder variational quantum circuit (30b).

13. The quantum circuit based autoencoder (10) of claim 11 or 12, wherein a cumulative number of decoder output features obtained through projective measurements (28, 36) of the respective decoder qubits (31) of the first decoder variational quantum circuit (30a) and the second decoder variational quantum circuit (30b) is greater than the feature number of latent features obtained through projective measurement (28, 36) of the computation qubits (22) of the encoder variational quantum circuit; and /or
wherein the first decoder variational quantum circuit (30a) and the second decoder variational quantum circuit (30b) are configured to receive an identical latent feature of the latent features as an input, wherein the inputs of the first decoder variational quantum circuit (30a) and the second decoder variational quantum circuit (30b) are in particular configured to encode the same latent features.

14. A feature extraction system comprising the quantum circuit based autoencoder (10) of any one of claims 11 to 13, further comprising a training module configured to train the quantum circuit based autoencoder (10) to reproduce features of a multi-feature dataset at its output, and optionally further a scoring module configured to determine a feature score for a scored feature (40) of a multi-feature dataset based on a contribution score between the scored feature (40) and the latent feature vector (20) for each feature passed as an input to the autoencoder (10) during training, wherein the contribution score quantifies the contribution of the scored feature (40) to the latent feature vector (20), and preferably comprises a correlation matrix score, a SHapley Additive exPlanations value, or a mathematical equivalent thereof.

15. A computer program comprising machine readable instructions, which when the computer program is executed by a processing system cause the processing system to implement a method according to any one of claims 1-10 and/or to implement a system according to any one of claims 11-14.
